# EUROPEAN PATENT SPECIFICATION

(11) **EP 4 511 640 B1**
(45) Date of publication and mention of the grant of the patent: **24.12.2025**
(21) Application number: 23720885.5
(22) Date of filing: 20.04.2023
(51) Int. Cl.: G01N 21/80, G01N 31/22, G01J 1/42, G01J 1/50

(54) **STABLE UV INDICATOR**
STABILER UV INDIKATOR
INDICATEUR UV STABILE

(30) Priority: 21.04.2022 GB 202205796
(43) Date of publication of application: 26.02.2025
(73) Proprietor: Intellego Technologies AB (Sweden), 169 73 Solna (SE)
(72) Inventor: LINDAHL, Claes, 17066 Solna (SE); OSTERTAG, Laila Moreno, 1130 Vienna (AT)
(74) Representative: Marks & Clerk LLP
(86) International application number: PCT/EP2023/060350
(87) International publication number: WO 2023/203159

(56) References cited:
- WO-A1-2009/047152
- WO-A1-2010/070290
- US-A1- 2006 063 883
- US-A1- 2020 149 960
- US-B2- 8 501 053

## Description

### Field of the Invention

The present invention relates to an ultraviolet (UV) colourimetric indicator. In particular, but not exclusively, the invention relates to a UV colourimetric indicator exhibiting a delayed colour change upon exposure to UV radiation.

### Background

Many products exist, that provide a visual indication (through a colour change) of exposure to a certain amount of a particular compound or radiation. Such products typically include one or more colourimetric indicators. For example, colourimetric indicators rely on the optical properties of reactive dyes or inks. These dyes can exist in at least two different chemical states, with each form of the dye absorbing light in a particular range of wavelength. When such a reactive dye existing in a first form is exposed to a given substance, it reacts with the substance via a reversible chemical reaction, thereby turning into a second form of the dye. As the second form of the dye absorbs light at a different wavelength, the chemical reaction provides a colour change which is visible by an observer. Colourimetric indicators may be configured to display reversible colour changes or irreversible colour changes, depending on their intended use, and the chemical substance, radiation or stimulus causing the colour change in the indicator. An example of a colourimetric indicator reactive to irradiation by ultraviolet radiation (UVR) is disclosed in WO 2010/070290 (Mills et al).

Exposing a surface to a given type of radiation may be either desired or deliberate, or may be undesirable or unintentional.

For example, whilst exposure of one's skin to direct sunlight may be desired and to some extent beneficial, overexposure to ultraviolet radiation is a recognised health hazard. Certain products exist, such as stickers or wristbands marketed under the name Smartsun^{™}, which include a colourimetric indicator that displays a colour change after exposure to a certain type and/or quantity of UV radiation. This provides a user with a visual indication associated with exposure to a predetermined amount of UV radiation.

In another example related to sterilization and disinfection, products include a colorimetric indicator that displays a colour change after exposure to a certain amount of UVC radiation. This provides a user with a visual indication associated with exposure to UVC radiation. UVC irradiation is a known technique for and disinfecting and sterilizing surfaces, for example in a medical environment or in the foodstuff industry.

Other products rely on colourimetric indicators that exhibit a colour change when exposed to a particular compound or chemical substance, such as carbon dioxide, oxygen, ammonia, or the like. These can be useful, for example, in the food industry.

In relation to monitoring exposure to UV radiation, for example UVA and/or UVB radiation, WO 2010/070290 (Mills et al) discloses a UV radiation response indicator comprises a first UVB and/or UVA radiation sensitive material which has been modified so as to display an altered characteristic in a delayed manner in response to UVB and/or UVA radiation exposure. In some embodiments, the indicator UV-sensitive material comprises a UV radiation-driven acid release agent and a pH indicator which displays altered colour between deprotonated and acid forms, and a proton-scavenging agent so as to delay protonation of the pH indicator by the UV radiation-driven acid release agent.

Whilst such a system is effective at providing a delayed colour change in response to exposure to radiation, e.g. UV, this system also has some limitations. For example, this composition can be prone to colour fading. This means that, after exposure to UV radiation, the colour of the indicator (in its modified/exposed state) may lack stability over time. In addition, the amount of proton scavenger cannot be increased indefinitely - adding too much proton scavenger will reduce the intensity of the colours between the deprotonated and protonated forms of the pH indicator, thus adversely affecting the visible contrast upon colour change.

US2017023681A1 (Patel) discloses self-indicating instant radiation dosimeters for monitoring high-energy radiations, such as X-ray. The dosimeter contains a radiation-sensitive, colour-changing, indicating composition, e.g., a diacetylene (R-C≡C-C≡C-R', where R and R' are substituents groups) or a radiochromic dye, a polymeric binder and optionally a shelf life extender or an activator. The radiation sensitive composition changes colour instantly when exposed to high-energy radiation. The radiation-sensitive composition is protected from low energy radiation such as UV light, by a layer of low energy absorbing materials, such as UV absorbers in amounts of 5-30 wt% of solids, in order to extend shelf life.

US2006063883A1 (Folkeson) discloses an indicator device for determining the ageing of articles (e.g., plastic articles), which are degradable by ultraviolet (UV) radiation. The indicator comprises a first carrier material; a first pigment disposed in the first carrier material, the first pigment capable of being degraded by exposure to UV radiation; and wherein the first carrier material is configured so as to have a varying thickness such that upon exposure to UV radiation, a visible change in the pigment will occur which will result in a varying visible change over a first surface of the first carrier material.

US2009194708A1 (Studer et al) discloses a composition showing a colour change depending on the absorbed radiation-dose, comprising (a) an acid responsive colorant; (b) a photolatent acid wherein (b) is a sulfonyloxime ester compound.

US2005196616A1 (Stewart et al) discloses a photochromic article, e.g., an ophthalmic photochromic article, such as a plastic lens, in which the article comprises, in combination, (1) a rigid substrate, such as a transparent thermoset or thermoplastic polymeric substrate, (2) a photochromic polymeric coating superposed on, e.g., appended to, at least one surface of the substrate, the photochromic polymeric coating containing a photochromic amount of at least one organic photochromic material, e.g., spirooxazine, naphthopyran and/or fulgide, (3) a film comprising a cross-linked polyhydroxy polymer, e.g., a poly(vinyl alcohol) polymer, appended to said photochromic polymeric coating, and (4) a further organic polymer layer that is superposed on said film comprising a cross-linked polyhydroxy polymer.

It is an object of the invention to address and/or mitigate one or more problems associated with the prior art.

### Summary

According to a first aspect there is provided a colourimetric indicator, the indicator comprising:
a UV radiation-driven acid release agent;
a pH indicator which displays altered colour between deprotonated and acid forms;
a proton-scavenging agent; and
a UV stabiliser.

The inventors have surprisingly found that the presence of a UV stabiliser in the indicator composition not only improves the stability of the colour of the indicator in its modified/exposed state, but also provides the unexpected additional advantage that the colour change of the indicator may be further delayed. This means that the upper limit for maximum dose that will be absorbed before a colour change occurs, can be increased, compared to a similar composition devoid of the UV stabiliser. This also means that, for a predetermined or target dose that would cause a colour change in the indicator, the inclusion of the UV stabiliser may allow the amount of the proton-scavenging agent to be reduced, which may in turn increase the intensity of the colours between the deprotonated and protonated forms of the pH indicator, thus improving the visible contrast upon colour change.

The UV radiation-driven acid release agent may be capable of releasing a proton in response to exposure to UV radiation, e.g. to UVA, UVB and/or UVC radiation.

In an embodiment, the UV radiation-driven acid release agent may be capable of releasing a proton in response to exposure to UVA and/or UVB. Thus, the trigger radiation may be UVA and/or UVB. The trigger radiation may be in the region of 280-400 nm. In such instance, the indicator may be used in a sunburn indicator, which may be provided in the form of a wearable item such as a band, patch, sticker, tape, or the like.

In another embodiment, the UV radiation-driven acid release agent may be capable of releasing a proton in response to exposure to UVC. Thus, the trigger radiation may be UVC. The trigger radiation may be in the region of 100-280 nm. In such instance, the indicator may be used in apparatus may be a disinfection indicator and/or a sterilisation indicator.

The UV-driven acid release agent may comprise one or more compounds selected from the list consisting of chloral hydrate (CH), iodonium and/or sulphonium salts such as diphenyl iodonium chloride (DPIC), DPI-hexafluorophosphate, DPI-perfluor-1-butanesulfonate, DPI-triflate, 4-iodophenyl-diphenyl sulfonium triflate (IDST), 4-methylthiophenyl-DST, 2-napthyl-DST, 4-chlorophenyl-DST, and/or 4-bromophenyl-DST. In an embodiment, the UV-driven acid release agent may comprise or may consist of diphenyl iodonium chloride (DPIC).

The pH indicator may comprise one or more pH-sensitive dyes. The pH indicator, e.g. in its deprotonated form, may comprise one or more compounds selected from the list consisting of thymol blue (TB), Malachite Green (MG), Bromocresol Green (BG), Indophenol Blue (IB), Waxoline Blue (WB), hydroxyethyl amino-azobenzene, methyl red (MR), phenol red (PhR) and/or any other di/triphenyl methane, aminoazo, aminoanthraquinone dye. In an embodiment, the pH indicator may comprise or may consist of thymol blue (TB).

The proton-scavenging agent is capable of delaying protonation of the pH indicator by the UV radiation-driven acid release agent. Typically, the proton-scavenging agent may comprise or may consist of a base. The proton scavenging agents may comprise one or more compounds selected from the list consisting of NaOH, Na₂CO₃, NaHCO₃, NH₄OH, and/or Ca(OH)₂.

The UV radiation-driven acid release agent, pH indicator, and/or proton scavenging agent may be substantially as described in WO 2010/070290 (Mills et al).

The colourimetric indicator may further comprise a solvent and/or a carrier. It will be herein understood that a solvent may dissolve at least one of, e.g. all of, the components, e.g. dry components, of the colourimetric indicator. It will be herein understood that a carrier may disperse, e.g. in suspension, at least one of, e.g. all of, the components, e.g. dry components, of the colourimetric indicator.

Typically, the colourimetric indicator may comprise a solvent.

The solvent or carrier may comprise or may consist of an alcohol, an aldehyde, an ether, a ketone, or the like. The solvent or carrier may comprise one or more compounds selected from the list consisting of 1-butanol or 1-propanol.

The colourimetric indicator may further comprise a binder. The binder may comprise a polymer, e.g. polyvinyl butyral (PVB).

The UV stabiliser may comprise or may consist of a hindered amine light stabilizer ('HALS'). The UV stabiliser may comprise or may consist of a sebacate derivative, such as a sebacate diester. The UV stabiliser may comprise or may consist of bis(2,2,6,6-tetramethyl-4-(piperidine) sebacate.

The UV stabiliser, e.g. HALS, may be present in the indicator at a concentration of about 0.02 to about 0.2 w/v %, e.g. about 0.05 to about 0.1 w/v %.

By "w/v%", the concentration is expressed as a weight by volume ratio, i.e. based on the weight of a compound relative to the total volume of the liquid composition. This is generally used to quantify the amount of the compounds in the composition including a solvent, e.g. when the composition is provided as a wet ink.

The UV stabiliser, e.g. HALS, may be present in the indicator at a concentration of about 0.1 wt% to about 1.5 wt% by solid content, e.g. about 0.14 wt% to about 1.4 wt% by solid content, e.g. about 0.3 wt% to 0.8 wt% by solids content, e.g. about 0.36 wt% to about 0.71 wt% by solid content.

By "wt% solids" or "wt% by solid content", the concentration is expressed as a weight by weight ratio, i.e. based on the weight of a compound relative to the total weight of the composition, in solid form. This is generally used to quantify the amount of the compounds in the composition in dry form, e.g. when the composition is provided as a dry ink and/or after evaporation of the solvent.

The colourimetric indicator may be provided in the form of an ink, e.g. a printable ink. In such instance, the indicator may comprise:
a UV radiation-driven acid release agent;
a pH indicator which displays altered colour between deprotonated and acid forms;
a proton-scavenging agent;
a UV stabiliser;
a binder; and
a solvent and/or a carrier.

According to a second aspect, there is provided an apparatus comprising a colourimetric indicator according to the first aspect.

The apparatus may comprise a layer of the colourimetric indicator applied on a substrate.

The substrate may comprise a self-supporting layer, which may be rigid or flexible. The substrate may comprise a film, sheet, or the like. The substrate may comprise a polymeric material, e.g. polyethylene, polypropylene, PET, or the like. The substrate may comprise an inorganic material, such as glass. The substrate may comprise a cellulosic material, e.g. paper.

The apparatus may be or may be provided as an article, e.g. a wearable article such as a band, e.g. a wristband, a patch, a sticker, or the like.

According to a third aspect, there is provided a method of making an apparatus according to the second aspect, the method comprising:
providing a substrate;
applying on the substrate a colourimetric indicator, the indicator comprising:
   a UV radiation-driven acid release agent;
   a pH indicator which displays altered colour between deprotonated and acid forms;
   a proton-scavenging agent;
   a UV stabiliser;
   a binder; and
   a solvent and/or a carrier; and
evaporating the solvent and/or carrier.

It will be appreciated that any features described in relation to any aspect may equally apply to any other aspect, and, merely for brevity, are not repeated. For example, features described in relation to a composition or apparatus may apply to a method, and *vice versa.*

### Brief Description of Drawings

Embodiments of the present disclosure will now be given by way of example only, and with reference to the accompanying drawings, which are:
Figure 1 a schematic view of an apparatus according to a first embodiment;
Figure 2 a schematic view of an apparatus according to a second embodiment;
Figure 3 colour change test results obtained for exposure of an indicator comprising various amounts of a UV stabiliser, with or without a varnish, at different levels of irradiation;
Figures 4-9 individual colour change test results for separate indicator formulations (i.e. with different amounts of UV stabiliser), with or without a varnish;
Figure 10 comparison of the colour change at various irradiation doses for an uncoated sample, between an indicator including a UV stabiliser and an indicator free of UV stabiliser.

### Detailed Description

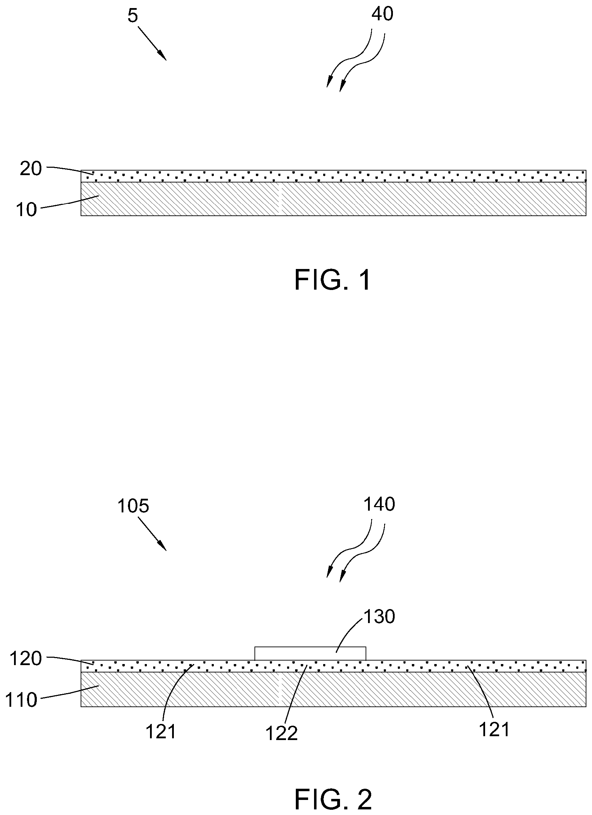

Referring to Figure 1 there is shown an indicator apparatus, generally designated 5, according to a first embodiment.

The apparatus 5 includes a substrate 10. In this embodiment, the substrate 10 is in the form of a polypropylene film.

The apparatus has a first layer 20 comprising a colourimetric indicator according to the present invention. The first layer 20 is provided on an upper side of the substrate 10, i.e., on a side of the substrate configured to face a source of radiation 40 (e.g. UV), in use.

The colourimetric indicator layer 20 comprises a UV radiation-driven acid release agent; a pH indicator which displays altered colour between deprotonated and acid forms; a proton-scavenging agent; a UV stabiliser; and a binder.

Typically, the apparatus 5 is prepared by applying the colourimetric indicator layer 20 as an ink (which further contains a solvent) on the substrate 10, and evaporating the solvent to yield a dry ink layer 20.

Referring to **Figure** 2 there is shown an indicator apparatus, generally designated 105, according to a second embodiment. The indicator apparatus 105 is generally similar to the indicator apparatus 5 of Figure 1, like parts denoted by like numerals, incremented by '100'.

In this embodiment, a central portion 122 of the first layer 120 is covered by a second layer 130. In this embodiment the second layer 130 is a coating or varnish.

The coating 130 includes a radiation absorber which blocks or absorbs the trigger radiation to which the indicator is reactive. The second layer 130 is substantially transparent to visible light, allowing a user to observe the second portion 122 of the first layer through the second layer. The radiation absorber may comprise one or more compounds selected from the group consisting of benzophenones, hydroxybenzophenones, hydroxyphenylbenzotriazoles, phenolic benzotriazoles, enzotriazoles, hydroxyphenyltriazines, and oxanilides. The radiation absorber typically comprises a benzophenone and/or a phenolic benzotriazole. In this embodiment, the coating 130 is a composition as marketed by Fujifilm^{™} as APR VA401 or as Fujifilm Sericol^{™} PY433 EL Overprint, or as marketed by Marabu^{™} as Mara^{®} Mold MPC 910 (which includes a phenolic benzotriazole).

In use, before exposure of the apparatus 105 to a source of irradiation 140, the colour of the first portion 121 in the first layer 120 which is free of coating 130 and of the second portion 122 covered by the coating 130 are a perfect match to an observer, since the entire first layer 20 includes the same indicator.

Following exposure of the apparatus to radiation 140, the indicator which is not covered by the coating 130 reacts in the first portion 121 of the first layer 120 and changes colour as a result. The second portion 122 thus acts as a reference portion, and allows detection of a colour change in the first portion 121 after exposure to a low level or dose of trigger radiation 140, e.g. after exposure to a level or dose of trigger radiation 140 which is lower than the minimum dose at which a user would normally be able to detect a colour change in the indicator. Such an embodiment is described in more detail in PCT application publication No WO2022/049194, the content of which is incorporated herein by reference in its entirety.

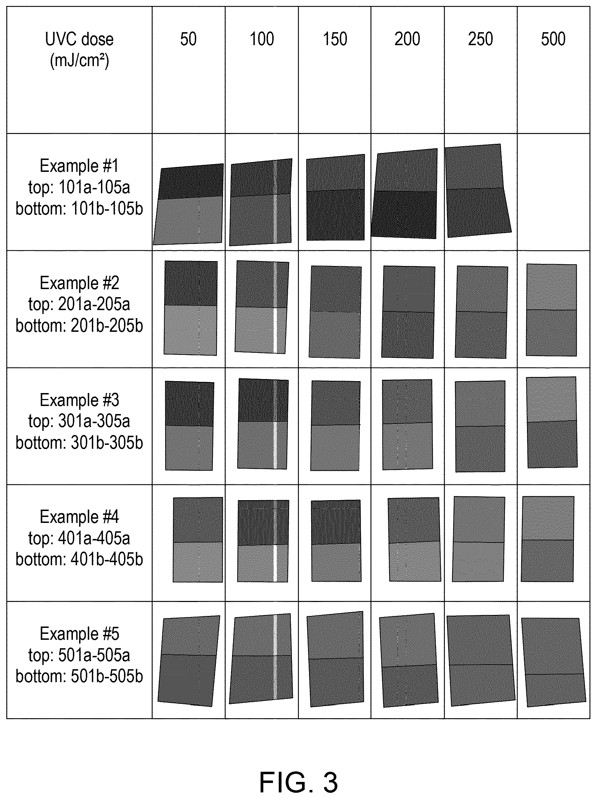

**Figure** 3 shows a compilation of colour change test results obtained for exposure of an indicator comprising various amounts of a UV stabiliser, with or without a varnish, at different levels of irradiation.

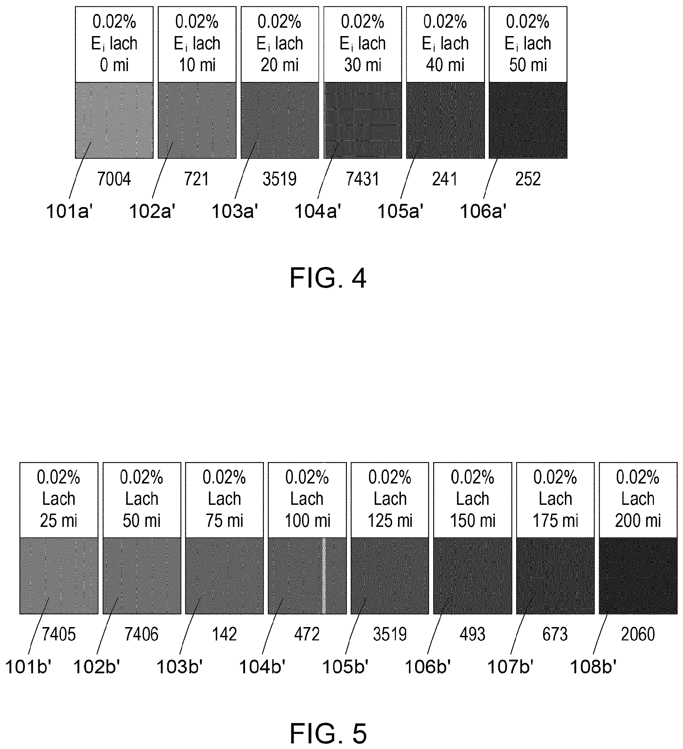

**Figures 4-9** show individual colour change test results for separate indicator formulations (i.e. with different amounts of UV stabiliser), with or without a varnish.

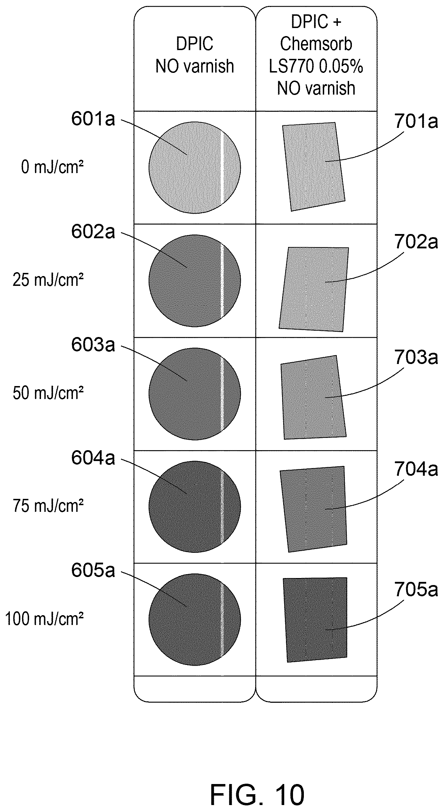

**Figure** 10 shows a comparison of the colour change at various irradiation doses for an uncoated sample, between an indicator including a UV stabiliser and an indicator free of UV stabiliser.

### Materials

The indicators were based on a "base" composition 'A' shown below in Table 1:

**Table 1**

| Compound | Quantity |
|---|---|
| Polyvinyl butyral (binder) | 109.09 g |
| Thymol blue (pH indicator) | 0.93 g |
| Diphenylodonium chloride (acid-release agent) | 2.24 g |
| 1-propanol (solvent) | 688 g |
| NaOH 1 M (proton-scavenger base) | 1.82 mL |

To the base composition 'A' were added various amounts of a UV absorber - in this embodiment a hindered amine light stabilizer (HALS), namely bis(2,2,6,6-tetramethyl-4-(piperidine) sebacate marketed as Chemsorb^{™} LS770 - to provide the following samples (Table 2):

**Table 2**

| Example # | Weight of HALS (g) | % HALS (w/v %) | % HALS (weight % solids) |
|---|---|---|---|
| 1 | 0.16 | 0.02 | 0.14 |
| 2 | 0.4 | 0.05 | 0.36 |
| 3 | 0.6 | 0.075 | 0.53 |
| 4 | 0.8 | 0.1 | 0.71 |
| 5 | 1.6 | 0.2 | 1.42 |

### Methods

For each example of Table 2, the indicator was applied on a polypropylene film substrate, and the solvent was evaporated (which was repeated twice) to provide a triple layer of UV-sensitive indicator having a thickness of about 100 µm. Each example had two samples: a first sample (denoted with the suffix 'a') which was untreated, and a second sample (denoted with the suffix 'b') which was coated with a protective varnish including a UVC radiation absorber in order to delay the colour change. The varnish was made of a composition marketed by Marabu as Mara^{®} Mold MPC 910.

Each sample was then exposed to a source of UVC radiation having a wavelength of 254 nm, up to a predetermined total irradiation dose identified in **Figures 3-9****.**

### Results

**Figure 3** shows a compilation of colour change test results obtained for exposure of an indicator comprising various amounts of a UV stabiliser (as per Table 2), with varnish in the top samples and without varnish in the bottom samples at irradiation levels of a UVC radiation between 50 and 500 mJ/cm².

**Figure 3** shows that at lower levels of the HALS UV stabiliser, especially 0.02 w/v% (#1) and 0.05 w/v% (#2), there is a clear colour change between 50 and 250 mJ/cm² when the sample is coated with a varnish.

In the uncoated samples (top row) the colour change has already occurred at 50 mJ/cm² for the uncoated sample.

An illustration of exposure of sample #1 without a varnish (101a'-106a') at UVC doses between 0 and 50 mJ/cm² is shown in **Figure 4****,** showing the colour change occurring progressively within this lower range of UVC dose. The suffix "'" was added in the reference numerals for Figure 4 to take into account that the range of exposure doses is different between Figure 4 and Figure 3.

The counterpart sample coated with a varnish (101b'-108b') **(****Figure** 5) shows the colour change occurring progressively at a higher range of UVC dose between about 75 and 175 mJ/cm², due to the presence of the varnish. Again, the suffix "'" was added in the reference numerals for Figure 5 to take into account that the range of exposure doses is different between Figure 5 and Figure 3.

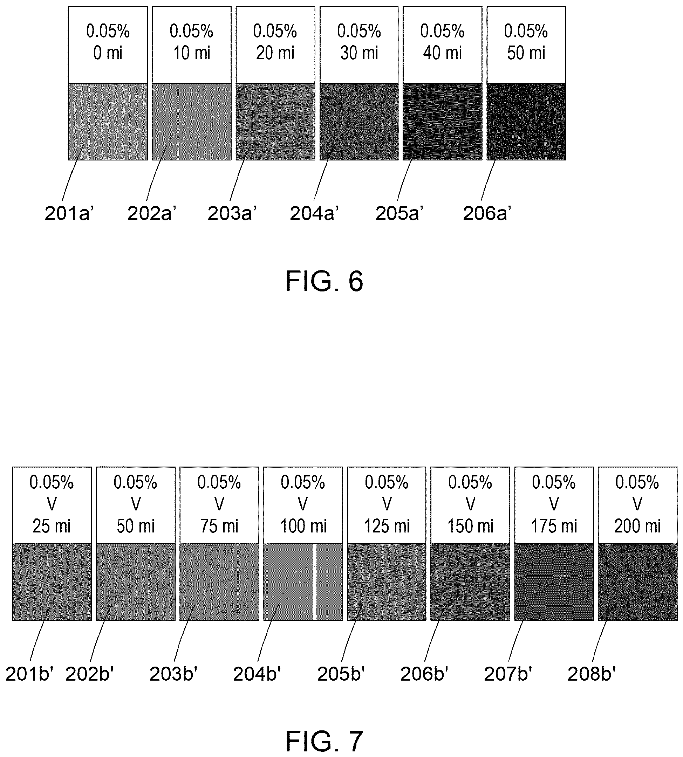

**Figure** 3 (example #2) and **Figures 6 and** 7 show that an increase of HALS compound in the composition to 0.05 w/v% requires a higher exposure dose of UVC radiation to trigger a colour change, both in the uncoated (201a'-206a') samples and the coated (201b'-208b') samples. As above, the suffix "'" was added in the reference numerals for Figures 6 and 7 to take into account that the range of exposure doses is different between Figures 6-7 and Figure 3.

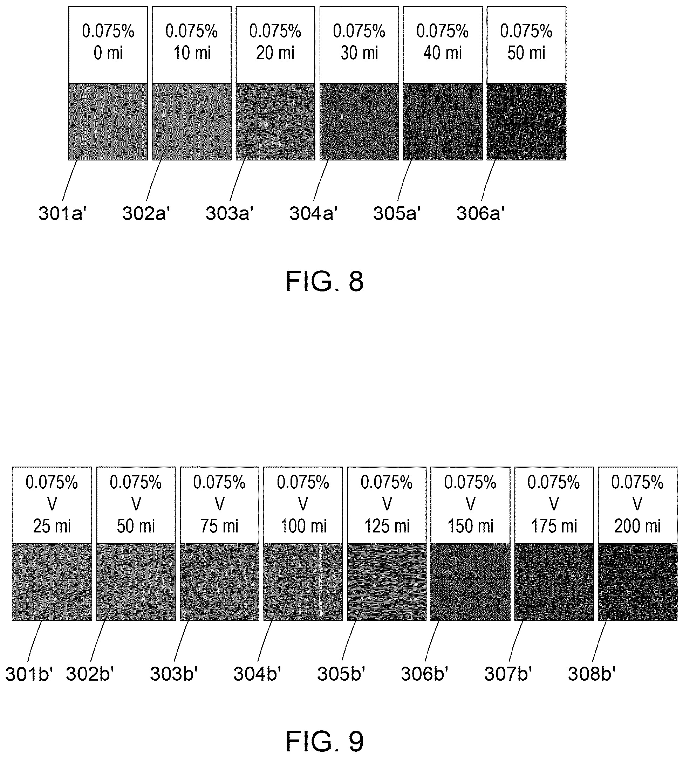

**Figure** 3 (example #3) and **Figures 8 and** 9 show that an increase of HALS compound in the composition to 0.75 w/v% requires a yet higher exposure dose of UVC radiation to trigger a colour change, both in the uncoated (301a'-306a') samples and the coated (301b'-308b') samples. As above, the suffix "'" was added in the reference numerals for Figures 8 and 9 to take into account that the range of exposure doses is different between Figures 8-9 and Figure 3.

With a higher amount of HALs compound (0.1 w/v%), **Figure** 3 (example #4) shows that, for the samples including a varnish (bottom samples), a change of colour is only visible from about 250 mJ/cm². However, the change of colour is still visible at lower exposure doses in the uncoated sample (top samples).

Finally, as shown in **Figure** 3 (example #5), a concentration of HALs compound of 0.2 w/v% leads to the absence of colour change up to about 500 mJ/cm².

Referring now to **Figure 10****,** there is shown a comparison of the colour change at various irradiation doses for an uncoated sample, between an indicator including a UV stabiliser and an indicator free of UV stabiliser. Images 601a-605a show the colour change resulting from UVC irradiation of an uncoated sample based on the base composition 'A' of Table 1 and free of a HALS UV stabiliser. Images 701a-705a show the colour change resulting from UVC irradiation of an otherwise similar uncoated sample based on the base composition 'A' of Table 1, but including a HALS UV stabiliser at 0.05 w/v%.

As can be seen from **Figure 10****,** the presence of HALS in the indicator composition after exposure to 25 mJ/cm² UVC radiation (702a) causes a delay in the colour change compared to a similar sample free of HALS (602a). The same effect can be observed at irradiation doses of 50 mJ/cm² (603a,703a), 75 mJ/cm² (604a,704a), and 100 mJ/cm² (605a,705a). This shows that, for a predetermined or target dose that would cause a colour change in the indicator, the inclusion of the UV stabiliser would allow the amount of the proton-scavenging agent in the composition to be reduced. This is believed to be advantageous as would increase the intensity of the colours between the deprotonated and protonated forms of the pH indicator, thus improving the visible contrast upon colour change.

It will be appreciated that the described embodiments are not meant to limit the scope of the present invention, and the present invention may be implemented using variations of the described examples.

## Claims

1. A colourimetric indicator, the indicator comprising:
a UV radiation-driven acid release agent;
a pH indicator which displays altered colour between deprotonated and acid forms;
a proton-scavenging agent; the indicator being **characterised in** further comprising:
a UV stabiliser.

2. . An indicator according to claim 1, wherein the UV radiation-driven acid release agent is capable of releasing a proton in response to exposure to UVA, UVB and/or UVC radiation.

3. . An indicator according to claim 1 or claim 2, wherein the UV-driven acid release agent comprises one or more compounds selected from the list consisting of chloral hydrate (CH), iodonium and/or sulphonium salts such as diphenyl iodonium chloride (DPIC), DPI-hexafluorophosphate, DPI-perfluor-1-butanesulfonate, DPI-triflate, 4-iodophenyl-diphenyl sulfonium triflate (IDST), 4-methylthiophenyl-DST, 2-napthyl-DST, 4-chlorophenyl-DST, and/or 4-bromophenyl-DST.

4. . An indicator according to any preceding claim, wherein the pH indicator comprises at least one pH sensitive dye, and/or wherein the pH indicator comprises one or more compounds selected from the list consisting of thymol blue (TB), Malachite Green (MG), Bromocresol Green (BG), Indophenol Blue (IB), Waxoline Blue (WB), hydroxyethyl amino-azobenzene, methyl red (MR), phenol red (PhR) and/or any other di/triphenyl methane, aminoazo, aminoanthraquinone dye.

5. . An indicator according to any preceding claim, wherein the proton-scavenging agent comprises or consists of a base, optionally wherein the proton scavenging agents comprises one or more compounds selected from the list consisting of NaOH, Na₂CO₃, NaHCO₃, NH₄OH, and/or Ca(OH)₂.

6. . An indicator according to any preceding claim, further comprising a solvent and/or a carrier, optionally wherein the solvent or carrier comprises or consists of 1-butanol or 1-propanol.

7. . An indicator according to any preceding claim, further comprising a binder, optionally wherein the binder comprises polyvinyl butyral (PVB).

8. . An indicator according to any preceding claim, wherein the UV stabiliser comprises or consists of a hindered amine light stabilizer ('HALS'), optionally wherein the UV stabiliser comprises or consists of bis(2,2,6,6-tetramethyl-4-(piperidine) sebacate.

9. . An indicator according to any preceding claim, wherein the UV stabiliser is present in the indicator at a concentration of about 0.02 to about 0.2 w/v %, optionally wherein the UV stabiliser is present in the indicator at a concentration of about 0.05 to about 0.1 w/v %.

10. . An indicator according to any preceding claim, wherein the UV stabiliser is present in the indicator at a concentration of about 0.1 wt% to about 1.5 wt% by solid content, optionally wherein the UV stabiliser is present in the indicator at a concentration of about 0.3 wt% to 0.8 wt% by solids content.

11. . An indicator according to any preceding claim, wherein the indicator is provided in the form of an ink.

12. . An apparatus (5) comprising:
a substrate (10); and
a layer (20) of a colourimetric indicator according to any of claims 1 to 11 applied on the substrate.

13. . An apparatus according to claim 12, wherein the substrate (10) comprises a self-supporting layer.

14. . An apparatus according to any of claims 12 to 13, wherein the apparatus is provided as a wearable article.

15. . A method of making an apparatus (5) according to claim 12, the method comprising:
providing a substrate (10);
applying on the substrate a colourimetric indicator, the indicator comprising:
a UV radiation-driven acid release agent;
a pH indicator which displays altered colour between deprotonated and acid forms;
a proton-scavenging agent;
a UV stabiliser;
a binder; and
a solvent and/or a carrier; and
evaporating the solvent and/or carrier.

## Patentansprüche

1. Kolorimetrischer Indikator, wobei der Indikator umfasst:
ein durch UV-Strahlung angetriebenes Säurefreisetzungsmittel;
einen pH-Indikator, der zwischen deprotonierter und saurer Form eine veränderte Farbe anzeigt;
ein Protonenfängermittel; wobei der Indikator **dadurch gekennzeichnet ist, dass** er weiter umfasst:
einen UV-Stabilisator.

2. Indikator nach Anspruch 1, wobei das durch UV-Strahlung angetriebene Säurefreisetzungsmittel imstande ist, als Reaktion auf die Einwirkung von UVA-, UVB- und/oder UVC-Strahlung ein Proton freizusetzen.

3. Indikator nach Anspruch 1 oder Anspruch 2, wobei das UV-angetriebene Säurefreisetzungsmittel eine oder mehrere Verbindungen umfasst, die aus der Liste ausgewählt sind, die aus Folgendem besteht: Chloralhydrat (CH), Iodonium- und/oder Sulfoniumsalze wie Diphenyliodoniumchlorid (DPIC), DPI-Hexafluorophosphat, DPI-Perfluor-1-butansulfonat, DPI-Triflat, (4-lodphenyl)diphenylsulfoniumtriflat (IDST), 4-Methylthiophenyl-DST, 2-Naphthyl-DST, 4-Chlorphenyl-DST, und/oder 4-Bromphenyl-DST.

4. Indikator nach einem vorstehenden Anspruch, wobei der pH-Indikator mindestens einen pH-empfindlichen Farbstoff umfasst und/oder wobei der pH-Indikator eine oder mehrere Verbindungen umfasst, die aus der Liste ausgewählt sind, die aus Folgendem besteht: Thymolblau (TB), Malachitgrün (MG), Bromkresolgrün (BG), Indophenolblau (IB), Waxoline Blue (WB), Hydroxyethyl-Aminoazobenzol, Methylrot (MR), Phenolrot (PhR) und/oder jeglicher andere Di-/Triphenylmethan-, Aminoazo-, Aminoanthrachinon-Farbstoff.

5. Indikator nach einem vorstehenden Anspruch, wobei das Protonenfängermittel eine Base umfasst oder daraus besteht, wobei optional das Protonenfängermittel eine oder mehrere Verbindungen umfasst, die aus der Liste ausgewählt sind, die aus Folgendem besteht: NaOH, Na₂CO₃, NaHCO₃, NH₄OH und/oder Ca(OH)₂.

6. Indikator nach einem vorstehenden Anspruch, weiter ein Lösungsmittel und/oder einen Träger umfassend, wobei optional das Lösungsmittel oder der Träger 1-Butanol oder 1-Propanol umfasst oder daraus besteht.

7. Indikator nach einem vorstehenden Anspruch, weiter ein Bindemittel umfassend, wobei das Bindemittel optional Polyvinylbutyral (PVB) umfasst.

8. Indikator nach einem vorstehenden Anspruch, wobei der UV-Stabilisator einen Lichtstabilisator aus der Gruppe der gehinderten Amine ("HALS") umfasst oder daraus besteht, wobei optional der UV-Stabilisator Bis(2,2,6,6-tetramethyl-4-piperidyl)sebacat umfasst oder daraus besteht.

9. Indikator nach einem vorstehenden Anspruch, wobei der UV-Stabilisator in dem Indikator in einer Konzentration von etwa 0,02 bis etwa 0,2 m/V-% vorliegt, wobei der UV-Stabilisator gegebenenfalls in einer Konzentration von etwa 0,05 bis etwa 0,1 m/V-% im Indikator vorliegt.

10. Indikator nach einem vorstehenden Anspruch, wobei der UV-Stabilisator im Indikator in einer Konzentration von etwa 0,1 Gew.-% bis etwa 1,5 Gew.-%, bezogen auf den Feststoffgehalt, vorliegt, wobei optional der UV-Stabilisator im Indikator in einer Konzentration von etwa 0,3 Gew.-% bis 0,8 Gew.-%, bezogen auf den Feststoffgehalt, vorliegt.

11. Indikator nach einem vorstehenden Anspruch, wobei der Indikator in Form einer Tinte bereitgestellt wird.

12. Einrichtung (5), umfassend:
ein Substrat (10); und
eine Schicht (20) eines kolorimetrischen Indikators nach einem der Ansprüche 1 bis 11, die auf dem Substrat aufgebracht ist.

13. Einrichtung nach Anspruch 12, wobei das Substrat (10) eine selbsttragende Schicht umfasst.

14. Einrichtung nach einem der Ansprüche 12 bis 13, wobei die Einrichtung als tragbarer Artikel bereitgestellt wird.

15. Verfahren zur Herstellung einer Einrichtung (5) nach Anspruch 12, wobei das Verfahren umfasst:
Bereitstellen eines Substrats (10);
Aufbringen eines kolorimetrischen Indikators auf dem Substrat, wobei der Indikator umfasst:
ein durch UV-Strahlung angetriebenes Säurefreisetzungsmittel;
einen pH-Indikator, der zwischen deprotonierter und saurer Form eine veränderte Farbe anzeigt;
ein Protonenfängermittel;
einen UV-Stabilisator;
ein Bindemittel; und
ein Lösungsmittel und/oder einen Träger; und
Verdampfen des Lösungsmittels und/oder des Trägers.

## Revendications

1. Indicateur colorimétrique, l'indicateur comprenant :
un agent de libération d'acide entraîné par rayonnement UV ;
un indicateur de pH qui affiche une couleur altérée entre les formes déprotonées et acides;
un agent piégeur de protons ; l'indicateur étant **caractérisé en ce qu'**il comprend en outre :
un stabilisateur UV.

2. Indicateur selon la revendication 1, dans lequel l'agent de libération d'acide entraîné par le rayonnement UV est capable de libérer un proton en réponse à une exposition aux UVA, UVB et/ou à un rayonnement UVC.

3. Indicateur selon la revendication 1 ou la revendication 2, dans lequel l'agent de libération d'acide entraîné par les UV comprend un ou plusieurs composés choisis dans la liste constituée de l'hydrate de chloral (CH), de l'iodonium et/ou de sels de sulfonium tels que le chlorure de diphényl iodonium (DPIC), le DPI-hexafluorophosphate, le DPI-perfluoro-1-butanesulfonate, le DPI-triflate, le triflate de 4-iodophényl-diphényl sulfonium (IDST), le 4-méthylthiophényl-DST, le 2-napthyl-DST, le 4-chlorophényl-DST, et/ou le 4-bromophényl-DST.

4. Indicateur selon l'une quelconque des revendications précédentes, dans lequel l'indicateur de pH comprend au moins un colorant sensible au pH, dans lequel l'indicateur de pH comprend un ou plusieurs composés sélectionnés dans la liste constituée du bleu de thymol (TB), du vert de malachite (MG), du vert de bromocrésol (BG), du bleu d'indophénol (IB), du bleu de waxoline (WB), de l'hydroxyéthylamino-azobenzène, du rouge de méthyle (MR), du rouge de phénol (PhR) et/ou de tout autre di/triphenyl méthane, aminoazo, colorant aminoanthraquinone.

5. Indicateur selon l'une quelconque des revendications précédentes, dans lequel l'agent piégeur de protons comprend ou est constitué d'une base, éventuellement dans lequel les agents piégeurs de protons comprennent un ou plusieurs composés choisis dans la liste constituée de NaOH, Na₂CO₃, NaHCO₃, NH₄OH, and/or Ca(OH)₂.

6. Indicateur selon l'une quelconque des revendications précédentes, comprenant en outre un solvant et/ou un support, éventuellement dans lequel le solvant ou le support comprend ou est constitué de 1-butanol ou de 1-propanol.

7. Indicateur selon l'une quelconque des revendications précédentes, comprenant en outre un liant, le liant comprenant éventuellement du polyvinylbutyral (PVB).

8. Indicateur selon l'une quelconque des revendications précédentes, dans lequel le stabilisant UV comprend ou est constitué d'un stabilisant à la lumière à amine encombrée (« HALS »), éventuellement dans lequel le stabilisant UV comprend ou est constitué de sébacate de bis(2,2,6,6-tétraméthyl-4-(pipéridine).

9. Indicateur selon l'une quelconque des revendications précédentes, dans lequel le stabilisant UV est présent dans l'indicateur à une concentration d'environ 0,02 à environ 0,2 w/v %, éventuellement dans lequel le stabilisant UV est présent dans l'indicateur à une concentration d'environ 0,05 à environ 0,1 w/v%.

10. Indicateur selon l'une quelconque des revendications précédentes, dans lequel le stabilisant UV est présent dans l'indicateur à une concentration d'environ 0,1 % en poids à environ 1,5 % en poids en termes de teneur en solides, éventuellement dans lequel le stabilisant UV est présent dans l'indicateur à une concentration d'environ 0,3 % en poids à 0,8 % en poids en termes de teneur en solides.

11. Indicateur selon l'une quelconque des revendications précédentes, dans lequel l'indicateur est fourni sous la forme d'une encre.

12. Appareil (5) comprenant :
un substrat de lentille (10); et
une couche (20) d'un indicateur colorimétrique selon l'une quelconque des revendications 1 à 11 appliquée sur le substrat.

13. Appareil selon la revendication 12, dans lequel le substrat (10) comprend une couche autoportante.

14. Appareil selon l'une quelconque des revendications 12 à 13, dans lequel l'appareil est fourni sous la forme d'un article portable.

15. Procédé de fabrication d'un appareil (5) selon la revendication 12, le procédé comprenant :
la fourniture d'un substrat (10) ;
l'application sur le substrat d'un indicateur colorimétrique, l'indicateur comprenant :
un agent de libération d'acide entraîné par rayonnement UV;
un indicateur de pH qui affiche une couleur altérée entre les formes déprotonées et acides ;
un agent piégeur de protons ;
un stabilisateur UV ;
un liant ; et
un solvant et/ou un transporteur ; et
l'évaporation du solvant et/ou du transporteur.
